(19) **Europäisches Patentamt / European Patent Office / Office européen des brevets**

(11) **EP 4 495 868 A1**

(12) ## EUROPEAN PATENT APPLICATION
published in accordance with Art. 153(4) EPC

(43) Date of publication:
**22.01.2025 Bulletin 2025/04**

(21) Application number: **23768774.4**

(22) Date of filing: **14.03.2023**

(51) International Patent Classification (IPC):
*G06Q 40/08* *(2012.01)*

(52) Cooperative Patent Classification (CPC):
**G06Q 40/08**

(86) International application number:
**PCT/JP2023/009896**

(87) International publication number:
**WO 2023/176844 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.03.2022 JP 2022044265**

(71) Applicant: **Bull Co., Ltd.**
**Utsunomiya-shi, Tochigi 320-0806 (JP)**

(72) Inventors:
• **KURAMOTO, Jun**
**Tokyo 105-0012 (JP)**
• **UTO, Yasuhito**
**Tokyo 105-0012 (JP)**
• **EGAWA, Yusuke**
**Tokyo 105-0012 (JP)**

(74) Representative: **Bardehle Pagenberg**
**Partnerschaft mbB**
**Patentanwälte Rechtsanwälte**
**Prinzregentenplatz 7**
**81675 München (DE)**

(54) **INSURANCE PREMIUM RATE CALCULATION SYSTEM AND INSURANCE PREMIUM RATE CALCULATION METHOD**

(57) An insurance premium rate calculation system according to an aspect of the present invention includes a collision probability calculation unit that calculates a collision probability of a collision between a spacecraft equipped with a deorbiting device and another flying object, and an insurance premium rate calculation unit that calculates, on the basis of a basic insurance premium rate for insurance relating to the spacecraft and at least the collision probability, an insurance premium rate for the insurance relating to the spacecraft equipped with the deorbiting device.

**EP 4 495 868 A1**

FIG.4

## Description

## Technical Field

The present invention relates to an insurance premium rate calculation system and an insurance premium rate calculation method.

## Background Art

In recent years, space-related business has developed greatly, and many spacecrafts, such as artificial satellites and space stations, are flying in orbit around the Earth. Meanwhile, Patent Document 1, for example, describes an insurance sales support technique for supporting the sale of insurance products by providing customers with information relating to the risk of damage.

Citation List

Patent Document

Patent Document 1: Patent Publication JP-A-2001-209702

## Summary

Technical Problem

In recent years, with the appearance of "satellite constellations", in which thousands, tens of thousands, or more spacecrafts cooperate to realize various functions, and so on, numbers of spacecraft are increasing, while at the same time, so-called debris (space junk), including spacecraft that continue to fly in orbit despite having completed their missions, fragments of damaged spacecraft, and so on, is becoming a problem, and it may therefore be said that the probability of collisions between spacecraft and other flying objects has increased. Since spacecraft are extremely expensive and capable of flying at high speeds, the damage and liability to other parties resulting from a collision can become significant. Therefore, the need for insurance to cover damage and compensation to other parties in relation to such spacecraft collisions is also increasing.

PMD (Post Mission Disposal), which is a method for remotely deorbiting a spacecraft that has completed its mission or has become debris for some reason from orbit by activating a device used for deorbiting (a deorbiting device), which is mounted on the spacecraft in advance in order to remove the spacecraft from orbit, is in use as a measure for reducing the probability of spacecraft collisions. The inventor of the present invention has confirmed, from both technical and insurance perspectives, that there is a significant correlation between the presence of a deorbiting device, as well as the configuration and specifications thereof, and the probability of a collision. The inventor of the present invention also found that by mounting the deorbiting device, an improvement can be achieved in the orbital environment, thus enabling a reduction in the risk of collisions and reductions in amounts paid out in insurance claims for collision-related insurance such as Third Party Liability insurance (TPL insurance), and as a result, insurance premiums can be reduced.

Accordingly, an object of the present invention is to provide an insurance premium rate calculation system and an insurance premium rate calculation method with which an insurance premium rate for a spacecraft equipped with a deorbiting device can be calculated appropriately.

Solution to Problem

An insurance premium rate calculation system according to an aspect of the present invention includes a collision probability calculation unit that calculates a collision probability of a collision between a spacecraft equipped with a deorbiting device and another flying object, and an insurance premium rate calculation unit that calculates, on the basis of a basic insurance premium rate for insurance relating to the spacecraft and at least the collision probability, an insurance premium rate for insurance relating to the spacecraft equipped with the deorbiting device.

According to this aspect, the insurance premium rate for the insurance relating to the spacecraft equipped with the deorbiting device is calculated on the basis of at least the basic insurance premium rate for the insurance relating to the spacecraft and the collision probability of a collision between the spacecraft equipped with the deorbiting device and another flying object. As a result, the insurance premium rate relating to the spacecraft equipped with the deorbiting device is calculated appropriately.

Advantageous Effects of Invention

According to the present invention, it is possible to provide an insurance premium rate calculation system and an insurance premium rate calculation method with which an insurance premium rate for a spacecraft equipped with a deorbiting device can be calculated appropriately.

**Brief Description of Drawings**

Fig. 1 is a schematic view illustrating an outline of an insurance premium rate calculation system 1 according to an embodiment.

Fig. 2A is a view illustrating an outline of a deorbiting device D.

Fig. 2B is a view illustrating an outline of the deorbiting device D.

Fig. 3 is a view showing an example hardware configuration of a business company device 100, a sales company device 200, and an insurance company device 300.

Fig. 4 is a functional block diagram showing an example of a functional configuration of the insurance premium rate calculation system 1 according to this embodiment.

Fig. 5 is a view showing results of a collision probability simulation.

Fig. 6 is an operation sequence showing an example of operation processing executed by the insurance premium rate calculation system 1 according to this embodiment.

Fig. 7 is an operation flow showing an example of insurance premium rate calculation processing.

**Description of Embodiments**

A preferred embodiment of the present invention will be described with reference to the attached drawings. (Note that in the drawings, elements to which identical reference symbols have been attached have identical or similar configurations.)

(1) Overall configuration

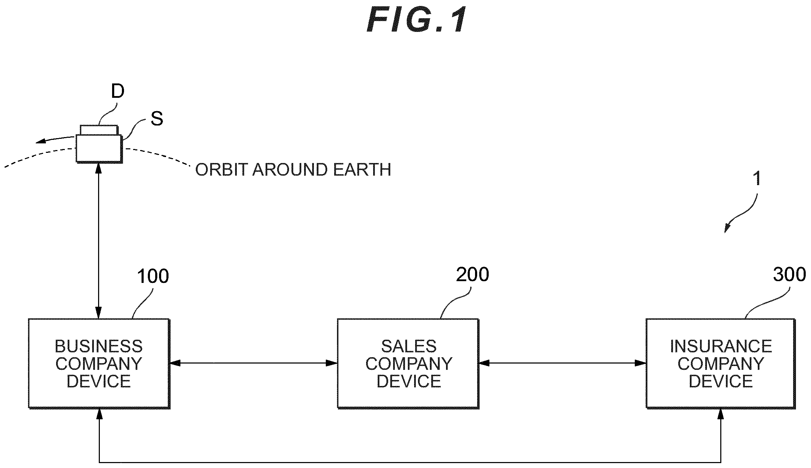

Fig. 1 is a schematic view illustrating an outline of an insurance premium rate calculation system 1 according to this embodiment. The insurance premium rate calculation system 1 includes a business company device 100, a sales company device 200, and an insurance company device 300, which are connected to each other through a communication network such as the Internet, for example, so as to be capable of exchanging information. The business company device 100 is an information processing device used by a business company that conducts predetermined business using a spacecraft S. The business company provides various business services by operating the spacecraft S after purchasing a deorbiting device from a sales company and mounting the deorbiting device on the spacecraft S. The spacecraft S may include any of a wide variety of objects that fly in orbit around the Earth or on a deorbiting trajectory, which is a trajectory followed when descending from orbit around the Earth toward the surface of the Earth, and may include artificial satellites, rockets, space stations, and so on. There are no particular limitations on the types of business services provided by the business company, and for example, the business services may include location information services, image services, communication services, and so on. A deorbiting device D is a device for performing PMD (Post Mission Disposal) for deorbiting the spacecraft S from orbit around the Earth after the spacecraft completes an operation by applying braking force (force for reducing the flying speed or the like) to the spacecraft S using a desired mechanism. The sales company device 200 is an information processing device used by the sales company that sells the deorbiting device D that is mounted on the spacecraft S. The insurance company device 300 is an information processing device used by an insurance company that provides TPL insurance in relation to the spacecraft S. Third party liability insurance is insurance that covers liability to a third party due to an accident. As long as the insurance provided by the insurance company relates to the spacecraft S, there are no particular limitations on the coverage content and so on, but the insurance may, for example, include third party liability insurance that guarantees liability to a third party related to another flying object when the spacecraft S collides with the other flying object while flying in orbit around the Earth or on a deorbiting trajectory.

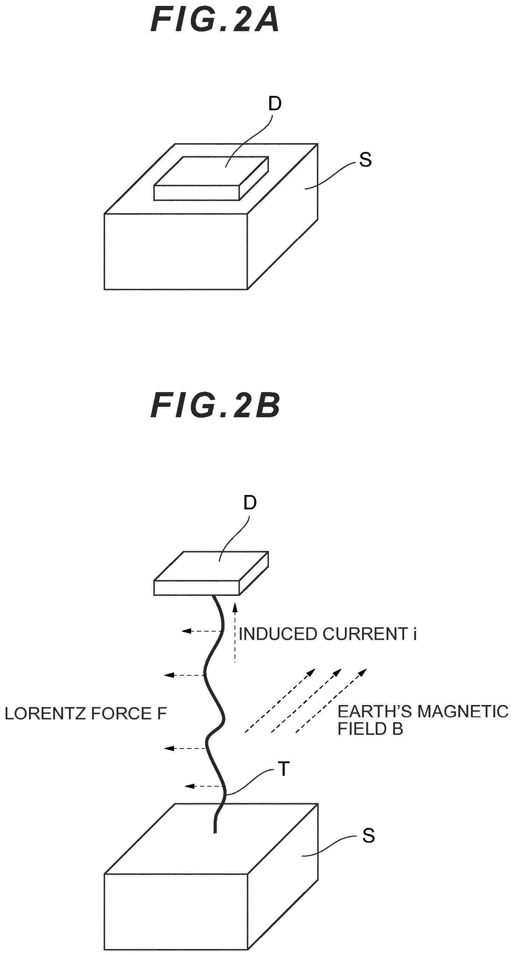

Figs. 2A and 2B are views illustrating an outline of an example of the deorbiting device D. The deorbiting device D has a substantially rectangular casing. There are no particular limitations on the dimensions of the deorbiting device D, but for example, when used on a small spacecraft, the deorbiting device D may be approximately 100 mm × approximately 100 mm × approximately 10 mm. A solar panel may be provided on the casing surface of the deorbiting device D as a power supply. The deorbiting device D is configured such that a string-like conductive tether T can be housed inside the casing. More specifically, the conductive tether T may be housed inside the deorbiting device D by being wound around a drum or the like provided in the deorbiting device D. Thus, when the spacecraft S is launched, for example, the deorbiting device D can be mounted so as to contact the spacecraft S, as shown in Fig. 2A. There are no particular limitations on the material of the conductive tether T as long as the material is conductive, and metal fiber such as aluminum fiber, conductive high-strength fiber, or the like, for example, may be used. Moreover, the conductive tether T is not limited to a string-like form and may be configured in the form or a net or the like.

At a predetermined timing, such as when the spacecraft S completes its mission, the deorbiting device D controls rotation of the drum around which the conductive tether T is wound in response to a control signal received from a terrestrial control center or the like, whereby the conductive tether T can be fed out from the deorbiting device D. The conductive tether T is extended by the gravity of the Earth substantially along a vertical direction (the gravitational direction of the Earth). As a result, as shown in Fig. 2B, the spacecraft S and the deorbiting device D are disposed at the two ends of the extended conductive tether T, and in this state fly on a deorbiting trajectory.

The end of the conductive tether T on the deorbiting device D side is configured to be electrically connectable, by a switch or the like, for example, to a CNT (Carbon-Nano Tube) emitter provided in the deorbiting device D. In a state where the conductive tether T and the CNT emitter are electrically connected, the conductive tether T absorbs electrons from surrounding plasma as an electron collector, and when the CNT emitter emits electrons into the surrounding plasma, an induced current i flows through a pseudo-closed circuit due to the electromagnetic action of the Earth's magnetic field B. Lorentz force F received by the induced current i from the Earth's magnetic field B turns into braking force, and the conductive tether T together with the deorbiting device D and the spacecraft S moving in orbit integrally therewith are decelerated by this braking force until eventually, the spacecraft S breaks away from the Earth's orbit and descends toward the surface of the Earth along the deorbiting trajectory. In response to a control signal received from a terrestrial control center or the like, the deorbiting device D is capable of passing a current corresponding to the control signal through the conductive tether T. Hence, by controlling the current amount, the braking force applied to the spacecraft S can be controlled, and the speed at which the spacecraft S descends can be controlled accordingly.

The deorbiting device to which the insurance premium rate calculation system 1 according to this embodiment can be applied may include a deorbiting device that is capable of varying the braking force (also referred to hereinafter as a "variable deorbiting device"), such as that shown in Figs. 2A and 2B, for example. However, the deorbiting device to which the insurance premium rate calculation system 1 according to this embodiment can be applied is not limited thereto and may also include a deorbiting device that cannot vary the braking force (also referred to hereinafter as a "fixed deorbiting device"). There are no particular limitations on the configuration of the fixed deorbiting device, and the device may have a member for receiving air resistance as the braking force, for example.

(2) Hardware configuration

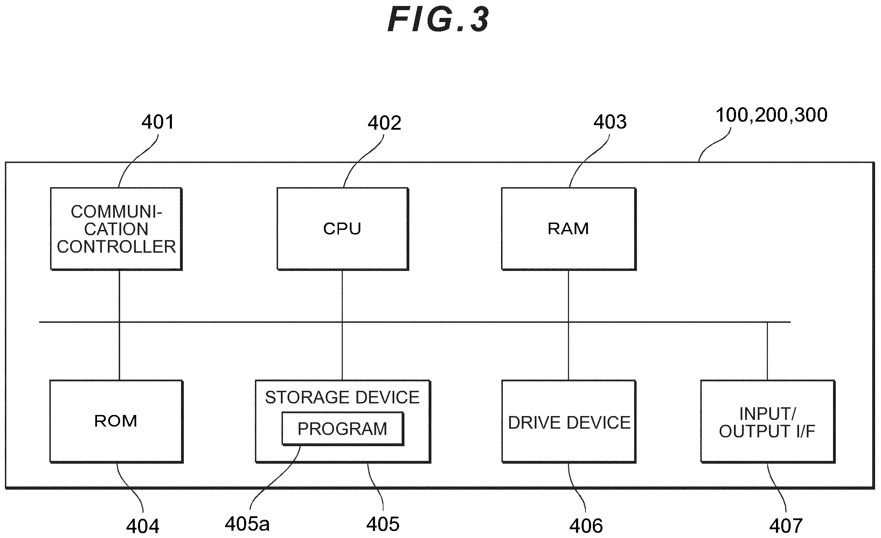

Fig. 3 is a view showing an example hardware configuration of the business company device 100, the sales company device 200, and the insurance company device 300. The business company device 100, the sales company device 200, and the insurance company device 300 are configured such that a communication controller 401, a CPU 402, a RAM (Random Access Memory) 403 used as a working memory, a ROM (Read Only Memory) 404 storing a boot program and so on, a storage device 405 such as a flash memory or an HDD (Hard Disk Drive), a drive device 406, an input/output I/F 407, and so on are connected to each other by an internal bus or a dedicated communication line. The communication controller 401 communicates with the other information processing devices. The storage device 405 stores a program 405a that is executed by the CPU 402. The program 405a is expanded to the RAM 403 by a DMA (Direct Memory Access) controller (not shown) or the like and executed by the CPU 402. The input/output I/F 407 includes an input device for receiving input into the business company device 100, the sales company device 200, and the insurance company device 300, and an output device for executing predetermined output. The input device may be any desired input device, such as a keyboard, a touch panel, a touch pad, a mouse, or a microphone, for example. The output device may be any desired output device, such as a display (a display device) or a speaker.

(3) Functional configurations of devices

(3-1) Business company device 100

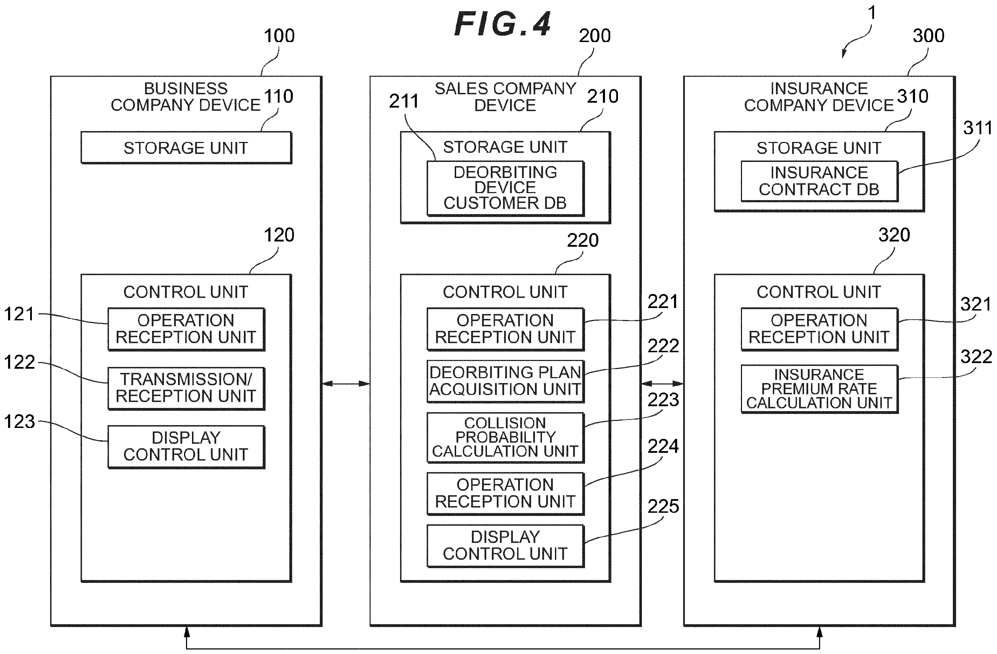

Fig. 4 is a functional block diagram showing an example of a functional configuration of the insurance premium rate calculation system 1 according to this embodiment. As shown in Fig. 4, the business company device 100 includes, for example, a storage unit 110 and a control unit 120. The control unit 120 includes, for example, an operation reception unit 121, a transmission/reception unit 122, and a display control unit 123.

The storage unit 110 can be realized using the storage device 405 provided in the business company device 100. The operation reception unit 121, the transmission/reception unit 122, and the display control unit 123 can be realized by having the CPU 402 of the business company device 100 execute the program 405a stored in the storage device 405. The program 405a can be stored in a storage medium. The storage medium storing the program 405a may be a non-transitory computer readable medium. There are no particular limitations on the non-transitory computer readable medium, and a storage medium such as a USB memory or a CD-ROM, for example, may be used.

The operation reception unit 121 receives various operations performed on the input device by an operator (a business company employee or the like). For example, the operation reception unit 121 receives input by the business company employee of various information relating to purchase of the deorbiting device D or insurance.

The transmission/reception unit 122 functions as a transmission unit and a reception unit, and transmits and receives various data to and from the other information processing devices. For example, the transmission/reception unit 122 receives display data of a purchase screen for the deorbiting device D from the sales company device 200. Further, for example, the transmission/reception unit 122 transmits information relating to purchase of the deorbiting device D to the sales company device 200. Furthermore, for example, the transmission/reception unit 122 receives display data of an insurance purchase screen from the insurance company device 300. Moreover, for example, the transmission/reception unit 122 transmits information relating to the purchase of insurance to the sales company device 200.

The display control unit 123 has a function for displaying various screens on the output device of the business company device 100. For example, on the basis of the display data of the purchase screen for the deorbiting device D, the display control unit 123 displays this purchase screen on the output device. Further, for example, on the basis of the display data of the insurance purchase screen, the display control unit 123 displays this purchase screen on the output device.

(3-2) Sales company device 200

As shown in Fig. 4, the sales company device 200 includes, for example, a storage unit 210 and a control unit 220. The control unit 220 includes, for example, an operation reception unit 221, a deorbiting plan acquisition unit 222, a collision probability calculation unit 223, a transmission/reception unit 224, and a display control unit 225.

The storage unit 210 can be realized using the storage device 405 provided in the sales company device 200. The operation reception unit 221, the deorbiting plan acquisition unit 222, the collision probability calculation unit 223, the transmission/reception unit 224, and the display control unit 225 can be realized by having the CPU 402 of the sales company device 200 execute the program 405a stored in the storage device 405. The program 405a can be stored in a storage medium. The storage medium storing the program 405a may be a non-transitory computer readable medium. There are no particular limitations on the non-transitory computer readable medium, and a storage medium such as a USB memory or a CD-ROM, for example, may be used.

The storage unit 210 stores various data and programs. More specifically, the storage unit 210 may include a deorbiting device customer DB 211, which is a database for registering information relating to customers of the sale of the deorbiting device, such as business companies. There are no particular limitations on the items registered in the deorbiting device customer DB 211, but for example, the items may include information relating to the business company, information relating to the spacecraft, and information relating to the deorbiting device. The information relating to the business company may include, for example, attribute information (industry, business type, size) about the business company, and performance-related information such as sales and profits. The information relating to the spacecraft may include, for example, attribute information (type, function, weight, dimensions, model, etc.) about the spacecraft operated by the business company, and information such as the content of the business service provided by the business company through the spacecraft and the flight plan of the spacecraft (altitude, orbital inclination of orbit around the Earth, number of years of mission, etc.). The information relating to the deorbiting device may include, for example, attribute information (shape, dimensions, weight, functions, model, model number) about the deorbiting device that the business company wishes to purchase, and information relating to a deorbiting plan, to be described below.

The operation reception unit 221 receives various operations performed on the input device by an operator (a sales company employee or the like). For example, the operation reception unit 221 receives input by the sales company employee of various information relating to the sale of the deorbiting device D.

The deorbiting plan acquisition unit 222 acquires the deorbiting plan. The deorbiting plan is information defining a plan for deorbiting the spacecraft S from orbit around the Earth, and can be defined as, for example, change over time in the altitude at which the spacecraft S flies. As described above, the deorbiting device D mounted on the spacecraft S can control the altitude at which the spacecraft S flies by applying braking force to the spacecraft S so as to reduce the flying speed of the spacecraft S. Accordingly, the deorbiting plan can be defined on the basis of the braking force generated by the deorbiting device D. Note that since braking force control in relation to the deorbiting device D is linked to the flying altitude of the spacecraft S, the deorbiting plan may be defined as a plan for controlling the braking force of the deorbiting device D (a plan for the degree of extension of the conductive tether T or the current value passed through the conductive tether T, for example). The deorbiting plan acquisition unit 222 may acquire the deorbiting plan by receiving a deorbiting plan input by a business company employee at the time of purchase of the deorbiting device D or the like, for example, from the business company device 100 through the transmission/reception unit 224. Alternatively, the deorbiting plan acquisition unit 222 may acquire a deorbiting plan input by a sales company employee or the like at the time of sale of the deorbiting device D or the like, for example.

The collision probability calculation unit 223 calculates the probability of a collision between the spacecraft S and another flying object. More specifically, the collision probability calculation unit 223 calculates the probability of a collision between the spacecraft S equipped with the deorbiting device D and another flying object.

Here, an example of the collision probability calculated by the collision probability calculation unit 223 will be described. Note that the collision probability illustrated below is merely an example, and the collision probability calculation unit 223 may calculate a collision probability defined by other numerical formulae.

Assuming that the spacecraft is a sphere with a diameter D (m) and debris is a sphere with a diameter d (m), an effective collision cross-section $A_d$ of the spacecraft and the debris is expressed by the following formula (Formula 1).

[Formula 1]

$$A_d = \pi(D + d)^2/4$$

At this time, a number of collisions N of the debris over a certain unit period $\Delta t$ is expressed by the following formula (Formula 2).

[Formula 2]

$$N = \Delta t \int_{d_s}^{d_l} A(d)\, d\varphi(d)$$

Here, $d\varphi$ (d) is the flux density of the debris of the size d (the number of pieces of debris passing through a unit surface area per unit time), and A (d) is the aforementioned effective collision cross-section Ad. As regards the flux density, a result calculated using simulation software such as ORDEM (Orbital Debris Engineering Model), published by the National Aeronautics and Space Administration, for example, may be used. More specifically, a desired flux density is determined by inputting the size d, the altitude, the orbital inclination, and so on of the debris. Further, ds denotes the minimum value of the diameter d of the debris, and dl denotes the maximum value of the diameter d of the debris. Note that the spacecraft S orbits (flies around) the Earth at an altitude at which centrifugal force and gravity are balanced.

A probability $P_n$ of the debris colliding n times over the unit period $\Delta t$ is expressed by the following formula (Formula 3), assuming that the collisions follow a Poisson distribution.

[Formula 3]

$$P_n = \frac{N^n e^{-N}}{n!}$$

Accordingly, a probability $P_{n \geq 1}$ of the debris colliding one or more times over the unit period $\Delta t$ is expressed by the following formula (Formula 4).

[Formula 4]

$$P_{n \geq 1} = 1 - e^{-N}$$

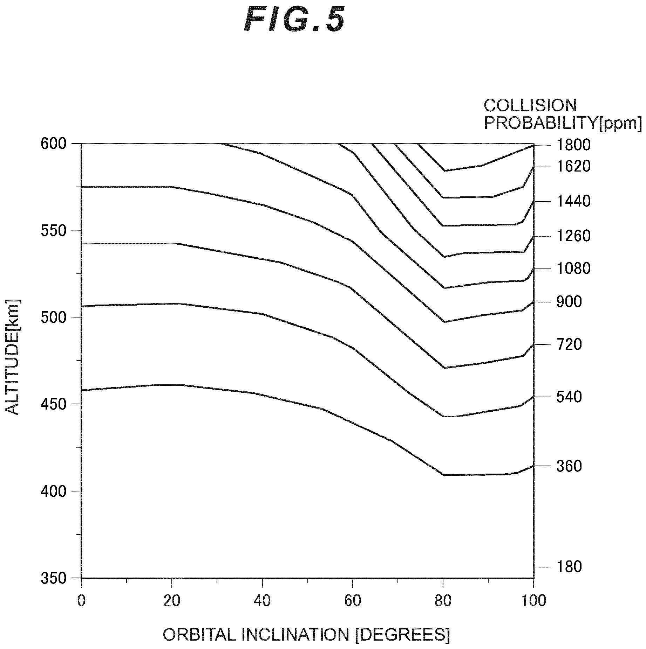

Fig. 5 shows the results of a simulation of the collision probability $P_{n \geq 1}$ (ppm) illustrated by Formula 4 in a case where the diameter of the spacecraft is D = 1 (m) and the unit period is $\Delta t$ = 1 (year). The horizontal axis is the orbital inclination (degrees), and the vertical axis is the altitude (km) of the spacecraft. As shown in Fig. 5, the collision probability generally increases as the orbital inclination increases. Further, the collision probability generally increases as the altitude of the spacecraft increases.

When an arbitrary period during which the spacecraft flies is set at a period of T times the unit period $\Delta t$ and the collision probability of Formula 4 during a j-th period (the probability of the debris colliding one or more times over the j-th unit period) is set as $P_j$, a probability $P_{safe}$ that the spacecraft will not collide with another flying object even once during this period is expressed by the following formula (Formula 5) on the basis of Formula 4.

[Formula 5]

$$P_{safe} = (1 - P_1) \times (1 - P_2) \times \cdots \times (1 - P_T)$$

Accordingly, a probability $P_{collide}$ that the spacecraft will collide with another flying object at least once during this period (a period of T times the unit period $\Delta t$) is expressed by the following formula (Formula 6).

[Formula 6]

$$P_{collide} = (1 - P_{safe}) = 1 - (1 - P_1) \times (1 - P_2) \times \cdots \times (1 - P_T)$$

The collision probability $P_{n \geq 1}$ over the unit period $\Delta t$, shown in Formula 4, includes the flying altitude of the spacecraft S as a parameter. More specifically, when the deorbiting device D is mounted on the spacecraft S, the flying altitude of the spacecraft S can be defined by the deorbiting plan carried out by the deorbiting device D on the spacecraft S. It may therefore be said that the collision probability $P_{n \geq 1}$ over the unit period $\Delta t$, shown in Formula 4, is defined as a function of the deorbiting plan. Furthermore, the probability $P_{safe}$ that the spacecraft will not collide with another flying object even once over an arbitrary period, as shown in Formula 5, is a function of T, which indicates the period length in a case where the unit period is set as $\Delta t$. The length T of the period may also be defined by the deorbiting plan. Accordingly, the probability $P_{collide}$ that the spacecraft will collide with another flying object at least once, as shown in Formula 6, which is defined on the basis of Formula 5, can be defined by the deorbiting plan. Thus, the collision probability can be set for the spacecraft S equipped with the deorbiting device D in accordance with the deorbiting plan.

As described above, the insurance premium rate calculation system 1 according to this embodiment can be applied to a fixed deorbiting device (a deorbiting device that is incapable of varying the braking force) as well as a variable deorbiting device (a deorbiting device that is capable of varying the braking force). In a case envisaged here, for example, a period (three years, for example) required for deorbiting that serves as the deorbiting plan for a certain variable deorbiting device, such as that shown in Figs. 2A and 2B, is shorter than a period (five years, for example) required for deorbiting that serves as the deorbiting plan for a certain fixed deorbiting device. In other words, the variable deorbiting device descends more quickly and crashes to Earth sooner than the fixed deorbiting device. In this case, since the variable deorbiting device descends more quickly than the fixed deorbiting device, with regard to the collision probability over each individual unit period, shown in Formula 4, the collision probability $P_{n \geq 1}$ of the variable deorbiting device is smaller than the collision probability $P_{n \geq 1}$ of the fixed deorbiting device. Furthermore, since the variable deorbiting device falls to Earth sooner than the fixed deorbiting device, with regard to the collision probability over an arbitrary period, shown in Formula 6, the collision probability $P_{collide}$ of the variable deorbiting device is smaller than the collision probability $P_{collide}$ of the fixed deorbiting device. Thus, by setting the deorbiting plan carried out by the variable deorbiting device, the collision probability of the variable deorbiting device can be reduced appropriately in comparison with the collision probability of the fixed deorbiting device, for example. Furthermore, as will be described below, as a result of the reduction in the collision probability, an insurance premium rate can be reduced. It may therefore be said that with the insurance premium rate calculation system 1 according to this embodiment, a greater effect in terms of reducing the insurance premium rate can be achieved by applying the system to a variable deorbiting device than to a fixed deorbiting device.

The transmission/reception unit 224 functions as a transmission unit and a reception unit, and transmits and receives various data to and from the other information processing devices. For example, the transmission/reception unit 224 transmits the display data of the purchase screen for the deorbiting device D to the business company device 100. Further, for example, the transmission/reception unit 224 receives information relating to purchase of the deorbiting device D from the business company device 100. Further, for example, the transmission/reception unit 122 receives information relating to the purchase of insurance from the business company device 100. Moreover, for example, the transmission/reception unit 122 receives insurance-related information from the insurance company device 300.

The display control unit 225 has a function for displaying various screens on the output device of the sales company device 200. For example, on the basis of the display data of the purchase screen for the deorbiting device D, the display control unit 225 displays this purchase screen on the output device. Further, for example, on the basis of the display data of the insurance purchase screen, the display control unit 225 displays this purchase screen on the output device.

(3-3) Insurance company device 300

As shown in Fig. 4, the insurance company device 300 includes, for example, a storage unit 310 and a control unit 320. The control unit 320 includes, for example, a transmission/reception unit 321 and an insurance premium rate calculation unit 322.

The storage unit 310 can be realized using the storage device 405 provided in the insurance company device 300. Further, the transmission/reception unit 321 and the insurance premium rate calculation unit 322 can be realized by having the CPU 402 of the insurance company device 300 execute the program 405a stored in the storage device 405. The program 405a can be stored in a storage medium. The storage medium storing the program 405a may be a non-transitory computer readable medium. There are no particular limitations on the non-transitory computer readable medium, and a storage medium such as a USB memory or a CD-ROM, for example, may be used.

The storage unit 310 stores various data and programs. More specifically, the storage unit 310 may include an insurance contract DB 311, which is a database for registering information relating to insurance contracts. There are no particular limitations on the items registered in the insurance contract DB 311, but the items may include, for example, identification information for identifying an insurance contract, such as a policy number, information relating to the contractor, the coverage content, and so on. Note that the insurance contract DB 311 may be configured to be accessible from the sales company device 200 and so on.

The transmission/reception unit 321 functions as a transmission unit and a reception unit, and transmits and receives various data to and from the other information processing devices. For example, the transmission/reception unit 321 receives information relating to the deorbiting device from the sales company device 200. More specifically, for example, the transmission/reception unit 321 may receive from the sales company device 200 the deorbiting plan acquired by the deorbiting plan acquisition unit 222 of the sales company device 200 and the collision probability calculated by the collision probability calculation unit 223 of the sales company device 200. Further, for example, the transmission/reception unit 321 transmits insurance-related information to the business company device 100 and/or the sales company device 200.

The insurance premium rate calculation unit 322 calculates a predetermined insurance premium rate. The predetermined insurance premium rate may be an insurance premium rate for insurance for covering damage and liability occurring when the spacecraft collides with another flying object. For example, the insurance premium rate calculation unit 322 may calculate an insurance premium rate that serves as a basic rate (a basic insurance premium rate). In this case, there are no particular limitations on the method for calculating the basic insurance premium rate, and a well-known algorithm for calculating an insurance premium rate or a method using machine learning may be used. The basic insurance premium rate may be an insurance premium rate for a case in which the deorbiting device is not mounted on the spacecraft, for example. The insurance premium rate calculation unit 322 may also calculate a correction coefficient resulting from the deorbiting device being mounted on the spacecraft. More specifically, the insurance premium rate calculation unit 322 may calculate the correction coefficient on the basis of the deorbiting plan and the collision probability received from the sales company device 200 or the like. Alternatively, the insurance premium rate calculation unit 322 may calculate the correction coefficient on the basis of a predetermined index relating to the deorbiting device. The predetermined index may be, for example, a braking capacity of the deorbiting device (an index indicating the amount of braking force that can be applied to the spacecraft), a type indicating a mechanism or a braking principle of the deorbiting device, a distinction between the variable deorbiting device and the fixed deorbiting device, a maximum value of the braking force generated by the variable deorbiting device, and so on. The insurance premium rate calculation unit 322 may also calculate an insurance premium rate for a case in which the deorbiting device is mounted on the spacecraft. More specifically, the insurance premium rate calculation unit 322 may calculate a value obtained by multiplying the correction coefficient resulting from the deorbiting device being mounted on the spacecraft by the basic insurance premium rate described above (the insurance premium rate for a case in which the deorbiting device is not mounted on the spacecraft, or the like) as this insurance premium rate (the insurance premium rate for a case in which the deorbiting device is mounted on the spacecraft).

(4) Sequence

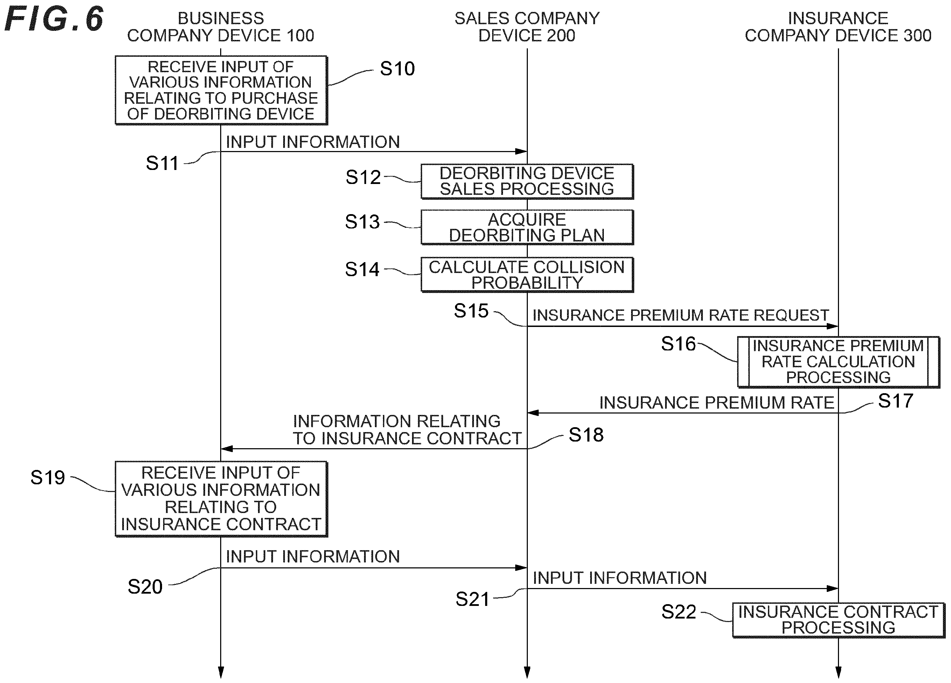

Fig. 6 is an operation sequence showing an example of operation processing executed by the insurance premium rate calculation system 1 according to this embodiment. This operation sequence is executed when, for example, the business company operating the spacecraft purchases the deorbiting device from the sales company and also purchases third party liability insurance provided by the insurance company.

(S10) First, the business company device 100, in a state where the deorbiting device purchase screen or the like is displayed on the display device, for example, receives input of various information relating to purchase of the deorbiting device in accordance with operations performed on the input device by an operator such as an employee of the business company. The input information may include, for example, information relating to the business company, information relating to the spacecraft, and information relating to the deorbiting device. The information relating to the business company may include, for example, attribute information (industry, business type, size) about the business company, and performance-related information such as sales and profits. The information relating to the spacecraft may include, for example, attribute information (type, function, weight, dimensions, model, etc.) about the spacecraft operated by the business company, and information such as the content of the business service provided by the business company through the spacecraft and the flight plan of the spacecraft (altitude, orbital inclination of orbit around the Earth, number of years of mission, etc.). The information relating to the deorbiting device may include, for example, attribute information (shape, dimensions, weight, functions, model, model number) about the deorbiting device that the business company wishes to purchase, and information relating to the deorbiting plan. Note that the business company device 100 may receive input of a plurality of deorbiting plans.

(S11) Next, the business company device 100 transmits the information input in step S10 to the sales company device 200. The sales company device 200 receives the input information from the business company device 100.

(S12) Next, the sales company device 200 executes processing for selling the deorbiting device on the basis of the input information received from the business company device 100 in step S11. For example, the sales company device 200 may register the received input information in the deorbiting device customer DB 211. Further, for example, the sales company device 200 may transmit information relating to an order for the deorbiting device to another information processing device that manages manufacture and inventory of the deorbiting device on the basis of the input information received from the business company device 100.

(S13) Next, the sales company device 200 acquires a deorbiting plan (change over time in the altitude at which the spacecraft S flies, corresponding to the braking force generated by the deorbiting device) on the basis of the input information received from the business company device 100 and so on. When the input information received from the business company device 100 includes a deorbiting plan input by a business company employee or the like, the sales company device 200 may acquire this deorbiting plan. Alternatively, the sales company device 200 may acquire a deorbiting plan input by a sales company employee or the like. Note that the sales company device 200 may acquire a plurality of deorbiting plans.

(S14) Next, on the basis of the input information received from the business company device 100 and so on, the sales company device 200 calculates, for the spacecraft operated by the business company device 100, the probability of a collision between the spacecraft when equipped with the deorbiting device to be purchased and another flying object. The collision probability may be calculated using Formula 4 above, for example. In this case, the various parameters (the diameter D of the spacecraft, the flux density $d\varphi$ (d), the minimum value ds of the diameter d of the debris, the maximum value dl of the diameter d of the debris, and so on) may be defined on the basis of the input information received from the business company device 100 and the acquired deorbiting plan. Note that when there are a plurality of deorbiting plans, the sales company device 200 may calculate a collision probability corresponding to each deorbiting plan.

(S15) Next, the sales company device 200 transmits an insurance premium rate calculation request to the insurance company device 300. The insurance premium rate calculation request may include, for example, the input information received from the business company device 100, the at least one acquired deorbiting plan, and the calculated collision probability.

(S16) Next, the insurance company device 300 executes processing (insurance premium rate calculation processing) for calculating an insurance premium rate for insurance for covering damage and liability occurring when the spacecraft collides with another flying object. Calculation of the insurance premium rate will be described in detail below. As a result, an insurance premium rate is calculated. Note that when there are a plurality of deorbiting plans, the insurance company device 300 may calculate an insurance premium rate corresponding to each deorbiting plan.

(S17) Next, the insurance company device 300 transmits the at least one calculated insurance premium rate to the sales company device 200. Note that the insurance company device 300 may also transmit insurance-related information extracted from the insurance contract DB 311 to the sales company device 200. The sales company device 200 receives the insurance premium rate and so on from the insurance company device 300.

(S18) Next, the sales company device 200 transmits information relating to the insurance contract to the business company device 100. This information may include, for example, the at least one insurance premium rate acquired from the insurance company device 300 and the other insurance-related information extracted from the insurance contract DB 311. The business company device 100 receives this information from the sales company device 200.

(S19) Next, the business company device 100 displays an insurance contract screen on the display device on the basis of the information received from the sales company device 200, and receives input of various information required for the insurance contract in accordance with operations performed on the input device by an operator such as an employee of the business company. The input information may include, for example, attribute information (industry, business type, size) about the business company, and performance-related information such as sales and profits. The input information may also include, for example, information relating to the content of the insurance contract (the type of insurance, the insured amount, the contract period, the insurance premium rate, and so on). Note that when there are a plurality of insurance premium rates corresponding respectively to a plurality of deorbiting plans, the business company employee or the like may select a desired insurance premium rate.

(S20) Next, the business company device 100 transmits the information input in step S19 to the sales company device 200. The sales company device 200 receives the input information from the business company device 100.

(S21) Next, the sales company device 200 transmits the input information received from the business company device 100 in step S20 to the insurance company device 300.

(S22) Next, the insurance company device 300 executes insurance contract processing on the basis of the input information received from the sales company device 200 in step S21. For example, the insurance company device 300 may register the received input information in the insurance contract DB 311. The operation sequence is thus completed.

Note that although in steps S17 to S22, the business company device 100 and the insurance company device 300 exchange the information relating to the insurance contract and so on through the sales company device 200, the present invention is not limited thereto, and the business company device 100 and the insurance company device 300 may exchange information directly.

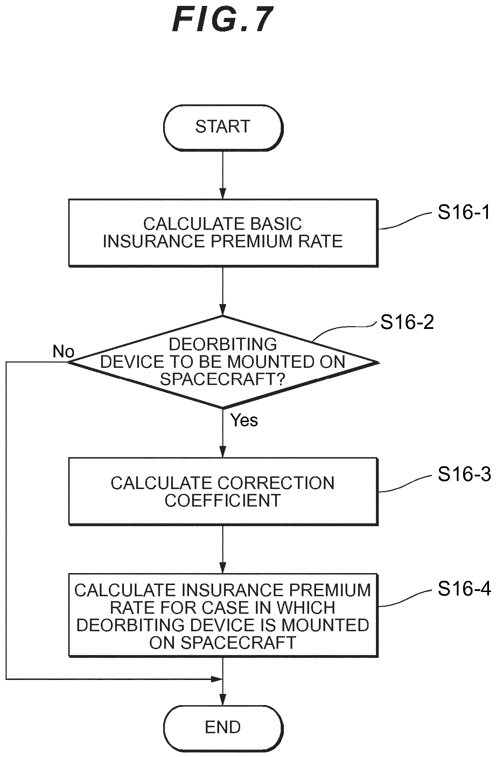

Fig. 7 is an operation flow showing an example of the insurance premium rate calculation processing. This operation flow is executed by the insurance company device 300 in step S16 described above, for example.

(S16-1) First, the insurance company device 300 calculates the basic insurance premium rate (the insurance premium rate for a case in which the deorbiting device is not mounted on the spacecraft, or the like) on the basis of the input information received from the business company device 100 and so on. For example, the insurance company device 300 calculates the basic insurance premium rate on the basis of information relating to the business company (the attribute information of the business company, the performance-related information, and so on) and information relating to the spacecraft (the attribute information of the spacecraft, the flight plan of the spacecraft, and so on). In this case, there are no particular limitations on the method for calculating the insurance premium rate, and a well-known algorithm for calculating an insurance premium rate may be used.

(S16-2) Next, the insurance company device 300 determines, on the basis of the input information received from the business company device 100 and so on, whether or not the deorbiting device is to be mounted on the target spacecraft. When it is determined that the deorbiting device is not to be mounted on the target spacecraft (S16-2; No), the processing is terminated, and the insurance premium rate for a case in which the deorbiting device is not mounted, calculated in step S16-1, is employed as the final insurance premium rate.

(S16-3) When, on the other hand, it is determined that the deorbiting device is to be mounted on the target spacecraft (S16-2; Yes), the insurance company device 300 calculates a correction coefficient relating to the deorbiting device on the basis of the input information received from the business company device 100 and so on. For example, the insurance company device 300 calculates the correction coefficient on the basis of the information relating to the deorbiting device (the attribute information of the deorbiting device, the deorbiting plan, and so on). There are no particular limitations on the method for calculating the correction coefficient, and the correction coefficient may be calculated by, for example, referring to a table or the like that defines, in advance, a correspondence relationship between the information relating to the deorbiting device and the correction coefficient. Note that when there are a plurality of deorbiting plans, the insurance company device 300 may calculate a correction coefficient corresponding to each deorbiting plan.

(S16-4) Next, the insurance company device 300 calculates an insurance premium rate for a case in which the deorbiting device is mounted on the spacecraft. The insurance premium rate calculation unit 322 may calculate a value obtained by multiplying the correction coefficient resulting from the deorbiting device being mounted on the spacecraft by the basic insurance premium rate as this insurance premium rate (the insurance premium rate for a case in which the deorbiting device is mounted on the spacecraft). The operation flow is thus completed.

The respective function units provided in the business company device 100, the sales company device 200, and the insurance company device 300 of the insurance premium rate calculation system 1 according to this embodiment are not limited to the configurations described with reference to Fig. 4, and may be provided in any desired information processing device (the business company device 100, the sales company device 200, the insurance company device 300, and so on). More specifically, the deorbiting plan acquisition unit 222 and the collision probability calculation unit 223 are not limited to the sales company device 200 and may be provided in the business company device 100 or the insurance company device 300. Further, the insurance premium rate calculation unit 322 is not limited to the insurance company device 300 and may be provided in the business company device 100 or the sales company device 200.

The embodiment described above is for facilitating understanding of the present invention and is not to be construed as limiting the present invention. The respective elements of the embodiment as well as the arrangements, materials, conditions, shapes, sizes, and so on thereof are not limited to those illustrated in the example embodiment and may be modified as appropriate. Furthermore, configurations disclosed in different example embodiments may be partially replaced or combined.

According to the present invention, it is possible to provide an insurance premium rate calculation system and an insurance premium rate calculation method with which an insurance premium rate can be calculated appropriately in relation to a spacecraft equipped with a deorbiting device. The characteristics of the spacecraft to be insured can be ascertained at the time of development or sale of the deorbiting device or the like, for example, and in so doing the collision risk of the spacecraft can be sufficiently ascertained. Furthermore, the minimum necessary insurance can be proposed automatically, and the insurance premium rate thereof can be calculated. Thus, it will become possible to improve the current system of insurance contracts as follows.

1. By developing the deorbiting device, the functions of the deorbiting device will be accurately ascertained.

2. As a result of point 1. above, it will be possible to propose and sell the most suitable deorbiting device for the spacecraft to be insured, making it possible to accurately ascertain the risk of a collision in orbit.

3. By combining point 2. above with an existing insurance database, it will become possible to appropriately reduce insurance premiums for TPL insurance and the like, which in the past were set at a comparatively high price due to the excessively high risk. Note that this system can be developed into an insurance premium rate calculation support program through the introduction of AI.

4. By comprehensively constructing the system of point 3. above, which does not currently exist, cost increases resulting from the involvement of many different stakeholders will be suppressed. At the same time, it will become possible to expand insurance databases, leading to an increase in the degree to which risk is actually reflected, and as a result, it will become possible to calculate insurance premium rates more accurately.

5. By introducing the present invention, sign-up rates for the deorbiting device and the insurance itself, such as TPL insurance, will increase, and as a result, it will become possible to create a virtuous cycle in which the orbital environment is maintained and improved, thereby reducing the factors that lead to increases in the risk (in other words, the insurance premium rate or the like, i.e., the risk assumed by the insurance company) of collisions in orbit, leading to further reductions in insurance premium rates and promotion of the introduction of insurance.

6. On the basis of this virtuous cycle, excessive costs that were previously paid due to being unrecognizable will be eliminated from the entire industry and market, and as a result, the return on investment relative to cost for each stakeholder will be improved. In a more fully visualized investment environment, further development of the industry and market is expected.

7. In the future, by sharing the information obtained by this flow among a plurality of insurance companies so as to increase the number of parameters, risk visualization will further advance, making it possible to construct a more accurate worldwide shared database. When this worldwide shared database becomes operational, it is expected that returns on investment relative to allowable costs will improve across the entire industry and market.

As described above, by not only constructing a temporary system but also newly developing and circulating the flow of points 1. to 5., the following effects can be obtained.

A. Deorbiting device developer: reducing business development hurdles by promoting the sale of the deorbiting device and providing TPL insurance coverage.

B. Insurance company: promoting sales by optimizing TPL insurance premium rate calculation (= reducing insurance premium rates).

C. Insured company: incentivized to introduce deorbiting devices, the introduction of which will be mandated by regulations in the near future, and fostering a sense of reassurance that insurance premium rates, which were previously calculated subjectively by insurance providers, will be calculated using more objective data.

Reference Signs List

| | |
|---|---|
| 1 | Insurance premium rate calculation system |
| 100 | Business company device |
| 110 | Storage unit |
| 120 | Control unit |
| 121 | Operation reception unit |
| 122 | Transmission/reception unit |
| 123 | Display control unit |
| 200 | Sales company device |
| 210 | Storage unit |
| 220 | Control unit |
| 221 | Operation reception unit |
| 222 | Deorbiting plan acquisition unit |
| 223 | Collision probability calculation unit |
| 224 | Transmission/reception unit |
| 225 | Display control unit |
| 300 | Insurance company device |
| 310 | Storage unit |
| 320 | Control unit |
| 321 | Transmission/reception unit |
| 322 | Insurance premium rate calculation unit |
| 401 | Communication controller |
| 402 | CPU |
| 403 | RAM |
| 404 | ROM |
| 405 | Storage device |
| 405a | Program |
| 406 | Drive device |
| 407 | Input/output I/F |
| D | Deorbiting device |
| S | Spacecraft |
| T | Conductive tether |
| B | Earth's magnetic field |
| i | Induced current |
| F | Lorentz force |

**Claims**

1. An insurance premium rate calculation system comprising:

   a collision probability calculation unit that calculates a collision probability of a collision between a spacecraft equipped with a deorbiting device and another flying object; and
   an insurance premium rate calculation unit that calculates, on the basis of a basic insurance premium rate for insurance relating to the spacecraft and at least the collision probability, an insurance premium rate for the insurance relating to the spacecraft equipped with the deorbiting device.

2. The insurance premium rate calculation system according to claim 1, wherein the basic insurance premium rate is an insurance premium rate for the insurance relating to the spacecraft not equipped with the deorbiting device.

3. The insurance premium rate calculation system according to claim 1 or 2, wherein the insurance is liability insurance that covers liability occurring when the spacecraft collides with another flying object.

4. The insurance premium rate calculation system according to any one of claims 1 to 3, further comprising a deorbiting plan generation unit that generates a deorbiting plan defining a plan for deorbiting the spacecraft from orbit using the deorbiting device,
wherein the collision probability calculation unit calculates the collision probability on the basis of the deorbiting plan.

5. The insurance premium rate calculation system according to claim 4, wherein the deorbiting plan includes information indicating change over time in the altitude of the spacecraft.

6. The insurance premium rate calculation system according to any one of claims 1 to 5, wherein the deorbiting device includes a conductive tether for extending the deorbiting device away from the spacecraft.

7. An insurance premium rate calculation method in which one or a plurality of computers executes:

a collision probability calculation step for calculating a collision probability of a collision between a spacecraft equipped with a deorbiting device and another flying object; and
an insurance premium rate calculation step for calculating, on the basis of a basic insurance premium rate for insurance relating to the spacecraft and at least the collision probability, an insurance premium rate for the insurance relating to the spacecraft equipped with the deorbiting device.

# FIG.1

# FIG.2A

# FIG.2B

INDUCED CURRENT i

LORENTZ FORCE F

EARTH'S MAGNETIC FIELD B

*FIG.3*

# FIG.4

BUSINESS COMPANY DEVICE — 100

STORAGE UNIT — 110

CONTROL UNIT — 120

- OPERATION RECEPTION UNIT — 121
- TRANSMISSION/ RECEPTION UNIT — 122
- DISPLAY CONTROL UNIT — 123

SALES COMPANY DEVICE — 200

STORAGE UNIT — 210

DEORBITING DEVICE CUSTOMER DB — 211

CONTROL UNIT — 220

- OPERATION RECEPTION UNIT — 221
- DEORBITING PLAN ACQUISITION UNIT — 222
- COLLISION PROBABILITY CALCULATION UNIT — 223
- OPERATION RECEPTION UNIT — 224
- DISPLAY CONTROL UNIT — 225

INSURANCE COMPANY DEVICE — 300

STORAGE UNIT — 310

INSURANCE CONTRACT DB — 311

CONTROL UNIT — 320

- OPERATION RECEPTION UNIT — 321
- INSURANCE PREMIUM RATE CALCULATION UNIT — 322

1

EP 4 495 868 A1

# FIG.5

**FIG.6**

| BUSINESS COMPANY DEVICE 100 | SALES COMPANY DEVICE 200 | INSURANCE COMPANY DEVICE 300 |
| --- | --- | --- |

S10 — RECEIVE INPUT OF VARIOUS INFORMATION RELATING TO PURCHASE OF DEORBITING DEVICE

S11 — INPUT INFORMATION →

S12 — DEORBITING DEVICE SALES PROCESSING

S13 — ACQUIRE DEORBITING PLAN

S14 — CALCULATE COLLISION PROBABILITY

S15 — INSURANCE PREMIUM RATE REQUEST →

S16 — INSURANCE PREMIUM RATE CALCULATION PROCESSING

← INSURANCE PREMIUM RATE — S17

← INFORMATION RELATING TO INSURANCE CONTRACT — S18

S19 — RECEIVE INPUT OF VARIOUS INFORMATION RELATING TO INSURANCE CONTRACT

INPUT INFORMATION → S20

INPUT INFORMATION → S21

S22 — INSURANCE CONTRACT PROCESSING

# FIG.7

```
                    ┌─────────────┐
                    │    START    │
                    └──────┬──────┘
                           │
                           ▼
          ┌──────────────────────────────┐
          │      CALCULATE BASIC         │────── S16-1
          │  INSURANCE PREMIUM RATE      │
          └──────────────┬───────────────┘
                         │
                         ▼
                   ╱─────────────╲
        No        ╱  DEORBITING   ╲────── S16-2
      ◄──────────  DEVICE TO BE MOUNTED ON
        │          ╲  SPACECRAFT?  ╱
        │           ╲─────┬───────╱
        │                 │ Yes
        │                 ▼
        │     ┌──────────────────────────┐
        │     │  CALCULATE CORRECTION    │────── S16-3
        │     │      COEFFICIENT         │
        │     └────────────┬─────────────┘
        │                  │
        │                  ▼
        │     ┌──────────────────────────────┐
        │     │ CALCULATE INSURANCE PREMIUM   │────── S16-4
        │     │  RATE FOR CASE IN WHICH       │
        │     │ DEORBITING DEVICE IS MOUNTED  │
        │     │      ON SPACECRAFT            │
        │     └────────────┬─────────────────┘
        │                  │
        └──────────────────┤
                           ▼
                    ┌─────────────┐
                    │    END      │
                    └─────────────┘
```

## INTERNATIONAL SEARCH REPORT

| | International application No. |
|---|---|
| | **PCT/JP2023/009896** |

### A. CLASSIFICATION OF SUBJECT MATTER

*G06Q 40/08*(2012.01)i
FI:   G06Q40/08

According to International Patent Classification (IPC) or to both national classification and IPC

### B. FIELDS SEARCHED

Minimum documentation searched (classification system followed by classification symbols)
G06Q10/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-51625 A (MITSUBISHI ELECTRIC CORP.) 01 April 2021 (2021-04-01) entire text, all drawings | 1-7 |
| A | WO 2015/190527 A1 (JAPAN AEROSPACE EXPLORATION AGENCY) 17 December 2015 (2015-12-17) entire text, all drawings | 1-7 |
| A | 的川泰宣. 宇宙ビジネス. 初版. ASCII Media Works Co., Ltd., 24 June 2011, pp. 108-109, 150-151, ISBN: 978-4-04-870161-7, non-official translation (MADOGAWA, Yasunori. The Space Business. First Edition.) entire text, all drawings | 1-7 |

☐ Further documents are listed in the continuation of Box C.    ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **10 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/009896**

| Patent document cited in search report | | | Publication date (day/month/year) | Patent family member(s) | | | Publication date (day/month/year) |
|---|---|---|---|---|---|---|---|
| JP | 2021-51625 | A | 01 April 2021 | (Family: none) | | | |
| WO | 2015/190527 | A1 | 17 December 2015 | EP | 3156335 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001209702 A